(19) Europäisches Patentamt / European Patent Office / Office européen des brevets

(11) **EP 2 912 486 B1**

(12) **EUROPEAN PATENT SPECIFICATION**

(45) Date of publication and mention of the grant of the patent:
**09.09.2020 Bulletin 2020/37**

(21) Application number: **13760065.6**

(22) Date of filing: **13.09.2013**

(51) Int Cl.:
**G01S 13/42** *(2006.01)*    **G01S 13/931** *(2020.01)*
**G01S 7/02** *(2006.01)*    **G01S 13/34** *(2006.01)*

(86) International application number:
**PCT/EP2013/069043**

(87) International publication number:
**WO 2014/063865 (01.05.2014 Gazette 2014/18)**

(54) **METHOD FOR SUPPRESSING INTERFERENCE IN A RECEIVED SIGNAL OF A RADAR SENSOR OF A MOTOR VEHICLE AND CORRESPONDING DRIVER ASSISTANCE DEVICE**

VERFAHREN ZUR UNTERDRÜCKUNG VON STÖRUNGEN IN EINEM EMPFANGENEN SIGNAL EINES RADARSENSORS EINES KRAFTFAHRZEUGS UND ENTSPRECHENDE FAHRERASSISTENZVORRICHTUNG

PROCÉDÉ DE SUPPRESSION DES INTERFÉRENCES DANS UN SIGNAL REÇU PROVENANT D'UN CAPTEUR RADAR D'UN VÉHICULE À MOTEUR ET DISPOSITIF D'AIDE À LA CONDUITE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2012 DE 102012021240**

(43) Date of publication of application:
**02.09.2015 Bulletin 2015/36**

(73) Proprietor: **Valeo Schalter und Sensoren GmbH 74321 Bietigheim-Bissingen (DE)**

(72) Inventor: **OSSOWSKA, Alicja 75177 Pforzheim (DE)**

(74) Representative: **Withopf, Kristina et al Valeo Schalter und Sensoren GmbH CDA-IP Laiernstraße 12 74321 Bietigheim-Bissingen (DE)**

(56) References cited:
EP-A2- 0 226 401        EP-A2- 1 840 595
WO-A1-98/33073        WO-A1-2011/002316
US-A- 6 094 160        US-A- 6 094 160
US-A1- 2006 125 682    US-A1- 2011 292 988
US-B2- 7 728 762

• BROOKER G M: "Mutual Interference of Millimeter-Wave Radar Systems", IEEE TRANSACTIONS ON ELECTROMAGNETIC COMPATIBILITY, IEEE SERVICE CENTER, NEW YORK, NY, US, vol. 49, no. 1, 1 February 2007 (2007-02-01), pages 170-181, XP011184082, ISSN: 0018-9375, DOI: 10.1109/TEMC.2006.890223

**Description**

The invention relates to a method for suppressing interference in a received signal received by a radar sensor of a motor vehicle. For detecting a target object in an environment of the motor vehicle, a transmit signal is emitted by means of the radar sensor, which includes a temporal sequence of consecutive frequency-modulated chirp signals. Then, the radar sensor receives an echo signal reflected on the target object as the received signal with the superimposed interference. After receiving the received signal, the interference in the received signal is detected and suppressed by means of an electronic computing device. The invention also relates to a driver assistance device formed for performing such a method.

Automotive radar sensors are already prior art and are for example operated at a frequency of ca. 24 GHz or ca. 79 GHz. Radar sensors generally serve for detecting target objects in the environment of the motor vehicle and support the driver in driving the motor vehicle in various manner. On the one hand, radar sensors measure the distance between the target object and the vehicle. On the other hand, they also measure both the relative velocity to the target object and the so-called target angle, i.e. an angle between an imagined connecting line to the target object and a reference line, for instance the vehicle longitudinal axis.

Radar sensors are usually placed behind the bumper, for example in the respective corner regions of the bumper. For detecting the target object, the radar sensor emits a transmit signal (electromagnetic waves), which is then reflected on the target object to be detected and received by the radar sensor as radar echo. Therein, the interest is directed to the so-called "frequency modulated continuous wave radar" or "FMCW radar", in which the emitted signal includes a sequence (burst) of frequency-modulated chirp signals, which are emitted one after the other. Correspondingly, the received signal of the radar sensor also includes such a plurality of chirp signals, which are processed and evaluated with regard to the above mentioned measured variables. Therein, the received signal is first mixed down to the baseband and subsequently converted into a digital received signal with a plurality of samples by means of an analog-digital converter. The samples of the received signal are then processed by means of an electronic computing device (digital signal processor), which can be integrated in the radar sensor.

With a radar sensor, typically, a relatively wide azimuth angle range is covered in horizontal direction, which can even be 150°. Thus, the radar sensor has a relatively large azimuth detection angle such that the field of view or the detection range of the radar sensor in azimuth direction is correspondingly wide. The azimuth detection angle is usually symmetrical with respect to a radar axis extending perpendicularly to the front sensor area such that the azimuth detection angle is dimensioned from for example -75° to +75° with respect to the radar axis. This azimuth detection range can be divided in smaller partial ranges, which are irradiated one after the other by the radar sensor. For this purpose, for example, the main lobe of the transmitting antenna is electronically pivoted in azimuth direction, for example according to the phase array principle. In this case, the receiving antenna can have a receive characteristic in azimuth direction, with which the entire azimuth detection range is covered. Such a radar sensor is for example known from the document DE 10 2009 057 191 A1.

With such a wide azimuth detection range of the radar sensor, it can prove problematic that the radar sensor is exposed to various interference signals, which originate from different spatial directions and are superimposed on the received signal of the radar sensor. The received signal of the radar sensor thus includes not only the useful signal (the reflected transmit signal), but also interference, which optionally can falsify the detection of the target object. This interference is to be detected and suppressed, in particular completely filtered out of the received signal, in the radar sensor.

Various methods are already known from the prior art, which serve for detecting the interference in a received signal of a radar sensor. Such methods are for example known from the printed matters US 2006/0125682 A1, US 6 094 160 A as well as US 6 121 918 A. However, all of these methods relate to the detection and suppression of the interference in a single chirp signal. However, if the entire chirp signal is affected by interference, thus, detection and suppression of the interference in the chirp signal are often not possible.

From the document US 2011/0291875 A1, a method for improving the performance of an FMCW radar system is known.

In WO 2011/002316 A1, a FMCW radar system is described that includes a received signal processor that is arranged to apply multiple window functions in parallel to a received beat signal.

The published patent application EP 1 840 595 A2 discloses an on-vehicle radar device that is adapted to shift a frequency band of a monitoring signal transmitted by a transceiver of the radar device based on a priority order signal received from another radar device.

An object of the invention is to demonstrate a solution, how in a method of the initially mentioned kind, in which the radar sensor emits a sequence of frequency-modulated chirp signals, the interference in the received signal can be reliably suppressed depending on the respectively current situation.

According to the invention, this object is solved by a method as well as by a driver assistance device having the features according to the respective independent claims. Advantageous implementations of the invention are the subject matter of the dependent claims, of the description and of the figures.

A method according to the invention serves for suppressing interference in a received signal of an automotive radar sensor, in particular of a frequency-modulated continuous wave radar sensor. For detecting a target object in the environment of the motor vehicle, a transmit signal including a sequence of consecutive frequency-modulated chirp signals is emitted by means of the radar sensor, and an echo signal reflected on the target object is received as the received signal with the superimposed interference. After receiving the received signal, the interference is detected and suppressed by means of an electronic computing device. At least two signal correction algorithms different from each other for suppressing the interference are stored in the computing device. Depending on the detected interference, at least one of the stored signal correction algorithms is selected in order to suppress the interference in the received signal.

Depending on the respectively current situation, thus, at least one of the stored signal correction algorithms for suppressing the interference in the received signal is adequately selected and applied to the received signal. Therein, the invention is based on the realization that in an FMCW radar sensor emitting a temporal sequence of chirp signals various scenarios can occur, in which the received signal is respectively affected in a different manner by the interference. While for example an entire chirp signal of the sequence (all of the temporal samples of the chirp signal) can be affected by interference in some scenarios, in other scenarios, only a portion of a chirp signal is impaired. On the other hand, in some scenarios, several adjacent chirp signals can also be affected by interference, while in other scenarios only a single chirp signal within a certain subset of chirp signals of the same sequence can be affected. These different scenarios also require respectively different signal correction algorithms, by which the interference can then be suppressed, in particular completely removed from the received signal depending on the current situation. Thus, the method according to the invention in particular has the advantage that the interference of the received signal can always be reliably and adequately suppressed and the target object can therefore be precisely detected.

The detection and suppression of the interference is preferably effected in the time domain after sampling the received signal. This means that the received signal is first mixed down to the baseband and converted into a digital received signal by means of an analog-digital converter such that the detection and the suppression of the interference are effected based on the sampled received signal in the time domain. Herein, the samples of the received signal can for example be grouped in a receive matrix in the manner that the respective lines of the receive matrix each include all of the samples of a single chirp signal of the received signal. The number of the lines of the receive matrix thereby corresponds to the number of the chirp signals within a sequence.

Preferably, the selection of a signal correction algorithm from the stored signal correction algorithms is effected individually for each chirp signal of the received signal, in which the interference is detected. The selection can also be effected individually for each detected interference. For different chirp signals within the sequence, namely, different requirements to the suppression of the interference respectively arise. While in some chirp signals, the interference can be suppressed by interpolation of the samples within a single chirp signal, in other chirp signals, interpolation over multiple chirp signals is required to suppress the interference. In still other chirp signals, interpolation is not possible, and the samples affected by interference can for example be replaced with a preset, constant value. Thus, the optimum signal correction algorithm for suppressing the interference in the different chirp signals can respectively be selected.

In an embodiment, the selection of the at least one signal correction algorithm is effected depending on the position of the chirp signal affected by interference within the sequence (burst). If the chirp signals affected by interference are a first or a last chirp signal of the sequence, thus, interpolation of the samples over multiple chirp signals basically is not possible, and only interpolation of samples within this one chirp signal or else replacing the affected samples with a preset value is a possibility.

Additionally or alternatively, the selection of the at least one signal correction algorithm for suppressing the interference within a chirp signal can be effected depending on the position of the interference within this chirp signal. For example, if the interference is at the beginning or else at the end of a chirp signal, thus, interpolation within this one chirp signal basically is not readily possible because basic points for the interpolation cannot be determined on both sides of the interference. Here, for example, interpolation over several chirp signals can be performed or the affected samples can be replaced with a preset value. Alternatively, such a constant value can also be used as a basic value for the interpolation within this chirp signal.

Additionally or alternatively, the selection of the signal correction algorithm can be effected depending on the length of the interference to be suppressed within a chirp signal. This means that the selection is effected depending on the number of samples, in which the interference is detected. This embodiment is based on the fact that interpolation of the samples within a single chirp signal is only reasonable up to a certain length or up to a certain number of samples, and with longer interference, other methods for suppressing the interference are more precise and reliable than the interpolation within the chirp signal.

In the electronic computing device, at least two signal correction algorithms are stored, which each serve for suppressing the interference and can be used in different situations. Preferably, three such signal correction algorithms in total are provided, one of which is individually selected for each chirp signal of the sequence depending on the detected interference.

For example, two signal correction algorithms can be stored, which differ from each other in whether samples of the received signal, in which the interference is detected, are replaced with interpolated values or else with a preset, constant value. Thus, it can be checked whether interpolation of the samples is possible or reasonable at all, and the samples affected by the interference can be replaced either with interpolated values or with a preset value depending on situation.

At least two stored signal correction algorithms can also differ in the direction of the interpolation and thus in whether interpolated values, with which samples (affected by interference) of the received signal within a certain chirp signal are replaced, are generated by interpolation of other samples within the same chirp signal or else by interpolation of samples of adjacent chirp signals. Thus, it can be distinguished between interpolation of samples within a single chirp signal on the one hand and interpolation of samples of different chirp signals, and depending on the current situation, the respectively optimum interpolation can be performed. The suppression of the interference is thus always particularly precisely and reliably effected.

According to a first signal correction algorithm, samples of a chirp signal of the received signal can be replaced with interpolated values, which are provided by interpolation of samples of adjacent chirp signals. In this first signal correction algorithm, thus, the samples of a chirp signal affected by interference are replaced with interpolated values, which are generated by interpolation of samples of the immediately adjacent chirp signals. With respect to the above mentioned receive matrix, the interpolation according to the first signal correction algorithm is accordingly effected column by column, such that a sample of a chirp signal affected by interference is replaced with an interpolated value obtained by interpolations of the samples, which have the same row position within the respective row of samples in the adjacent chirp signals. Linear interpolation is e.g. used. Thus, the first signal correction algorithm allows particularly reliably suppressing interference within a chirp signal even if this chirp signal is affected by interference over its entire signal length.

Preferably, the first signal correction algorithm is selected for suppressing the interference within a chirp signal whenever at least in the immediately adjacent chirp signals of the same sequence at least those samples are free of interference, which have the same row position within the respective chirp signal - and thus within the same row of samples - as the samples to be replaced. Preferably, the first signal correction algorithm is also selected on condition that the chirp signal affected by interference is not a first and not a last chirp signal within the sequence. Thus, the computing device checks whether or not the immediately adjacent chirp signals are free of interference. If interference is not detected there, thus, the interpolation is effected over multiple chirp signals, and the samples affected by interference are replaced with the interpolated values.

According to a second signal correction algorithm, samples of a chirp signal of the received signal can be replaced with interpolated values provided by interpolation of adjacent samples of the same chirp signal. Here, the interpolation is thus effected within a certain chirp signal such that the samples of the chirp signal affected by interference can be replaced by interpolation of adjacent samples of the same chirp signal. This embodiment in particular proves particularly advantageous if interference is also detected in the adjacent chirp signals in the same position or else the chirp signal is a first or a last chirp signal of the sequence.

Preferably, the second signal correction algorithm is selected for suppressing the interference within a chirp signal only on condition that the number of the samples to be replaced and thus the length of the interference within this chirp signal is smaller than a preset limit value. For example, this limit value can be 100 samples. Namely, it has turned out that interpolation within a certain chirp signal leads to satisfactory results only if this interpolation is maximally effected over a certain number of samples. If this number is exceeded, thus, another signal correction algorithm is preferably selected.

The second signal correction algorithm can be selected for suppressing the interference within a chirp signal if this chirp signal is a first or a last chirp signal of the sequence, or in immediately adjacent chirp signals of the same sequence, interference has been detected in those samples, which have the same row positions within the respective row of samples. Thus, the second algorithm is preferably selected if the conditions for the first algorithm are not satisfied. This means that the first signal correction algorithm takes priority over the second one and the second algorithm is selected for suppressing the interference within a chirp signal only if the conditions for the selection of the first algorithm are not satisfied with respect to this chirp signal.

According to a third signal correction algorithm, the samples of a chirp signal of the received signal affected by interference can be replaced with a preset, constant value. The third signal correction algorithm proves in particular advantageous in situations, in which neither the first nor the second algorithm can be applied. Thus, the third signal correction algorithm is preferably selected for suppressing the interference within a chirp signal only if the conditions for the selection of the first and the second algorithm are not satisfied. The selection of the third signal correction algorithm is accordingly effected if the two conditions are satisfied at the same time:

- the number of the samples to be replaced within the chirp signal is greater than a preset limit value (e.g. 100 samples), and
- this chirp signal is a first or a last chirp signal of the sequence, or in immediately adjacent chirp signals of the same sequence, interference is detected in those samples, which have the same row position within the respective chirp signal as the samples to be replaced.

If the conditions for the selection of the first signal correction algorithm are not satisfied, thus, with respect to the application of the second signal correction algorithm, in which interpolation of the samples within a certain chirp signal is performed, basically, two different embodiments are provided: if the samples to be replaced are at the beginning or at the end of the chirp signal, thus, either interpolation within this chirp signal can be performed or the samples affected by interference can be replaced with a constant value. If the method of interpolation is selected, thus, basic points for this interpolation are only given on one side of the affected samples, while basic points for the interpolation are not present on the other side. In order to be able to perform the interpolation, a constant value can be defined as the basic value for the interpolation on the one side, and the interpolation can be performed based on this constant value on the one hand and the actual basic value on the other hand.

In addition, the invention relates to a driver assistance device for a motor vehicle including an automotive radar sensor as well as an electronic computing device, which is for example also integrated in the radar sensor. For detecting a target object in the environment of the motor vehicle, the radar sensor is formed for emitting a transmit signal including a sequence of consecutive frequency-modulated chirp signals and for receiving an echo signal reflected on the target object as the received signal with superimposed interference. The electronic computing device is configured to detect and suppress the interference in the received signal after receiving the received signal by the radar sensor. The computing device is also configured to perform a method according to the invention.

A motor vehicle according to the invention includes a driver assistance device according to the invention.

The preferred embodiments presented with respect to the method according to the invention and the advantages thereof correspondingly apply to the motor vehicle according to the invention as well as to the driver assistance device according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on individual preferred embodiments as well as with reference to the attached drawings.

There show:

Fig. 1     in schematic illustration a motor vehicle with a driver assistance device according to an embodiment of the invention;

Fig. 2     an exemplary receive matrix of a radar sensor with a sequence of chirp signals, wherein the lines of the receive matrix each include all of the samples of a single chirp signal;

Fig. 3     a flow diagram or block diagram of a method according to an embodiment of the invention for detecting interference in the received signal;

Fig. 4     temporal progresses of a total of nine chirp signals of a received signal of the radar sensor, wherein a temporal progress of the interference is presented to each chirp signal; and

Fig. 5-7     an exemplary interference matrix, respectively, in which the position of the interferences in the received signal (in the receive matrix) is identified with positive integers.

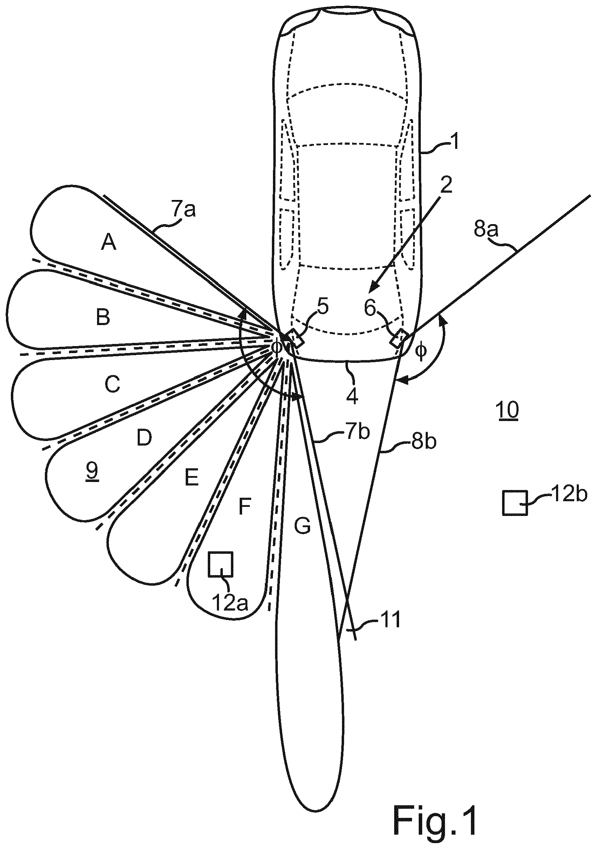

A motor vehicle 1 illustrated in Fig. 1 is for example a passenger car. The motor vehicle 1 includes a driver assistance device 2 assisting the driver in driving the motor vehicle 1. For example, it can be a blind spot warning and/or a lane change assist and/or a cross traffic alert and/or a door opening assist and/or a rear pre-crash.

Two radar sensors 5, 6 are associated with the driver assistance device 2, which are disposed behind a rear bumper 4 of the motor vehicle 1. The first radar sensor 5 is disposed in a left rear corner region of the motor vehicle 1, while the second radar sensor 6 is disposed in a right rear corner region. Both radar sensors 5, 6 are located behind the bumper 4 and are therefore not visible from the outside of the motor vehicle 1.

The radar sensors 5, 6 are frequency-modulated continuous wave radar sensors (FMCW) in the embodiment. The radar sensors 5, 6 each have an azimuth detection range $\phi$, which is bounded by two lines 7a, 7b (for the left radar sensor 5) and 8a, 8b (for the right radar sensor 6), respectively, in Fig. 1. The azimuth detection angle $\phi$ is for example 150°. By this angle $\phi$, a field of view 9 and 10, respectively, of the respective radar sensor 5, 6 in azimuth direction and thus in horizontal direction is respectively defined. The fields of view 9, 10 can also overlap each other such that an overlap region 11 exists.

Each radar sensor 5, 6 includes an integrated computing device for example in the form of a digital signal processor, which drives the radar sensor 5, 6 and additionally processes and evaluates the received signals. However, alternatively, an external computing device common to the two sensors 5, 6 can also be provided, which is able to then process the received signals of the two sensors 5, 6.

In their respective fields of view 9, 10, the radar sensors 5, 6 can detect target objects 12a (on the left) and 12b (on the right) external to vehicle. In particular, the radar sensors 5, 6 can determine the distance of the target objects 12a and 12b, respectively, from the respective radar sensor 5, 6 as well as respectively the target angle and the relative velocity of the target objects 12a and 12b, respectively, with respect to the motor vehicle 1 - they are measured variables of the radar sensors 5, 6.

With further reference to Fig. 1, the radar sensor 5 - and analogously also the sensor 6 - can successively irradiate various partial ranges A, B, C, D, E, F, G of the azimuthal field of view 9. These partial ranges A to G represent angular ranges, wherein for successively covering the partial ranges A to G for example a transmit lobe of the transmitting antenna of the radar sensor 5 is electronically pivoted in azimuth direction, namely according to the phase array principle. The different orientations of the transmit lobe are schematically indicated for the different partial ranges A to G in Fig. 1. The receiving antennas of the radar sensor 5 can overall have a wide receive characteristic in azimuth direction, with which the entire azimuthal field of view 9 is covered. Other configurations can alternatively realize narrow reception angle ranges in association with wide transmit lobes.

In Fig. 1, for the sake of clarity, only the partial ranges A to G of the field of view 9 of the first radar sensor 5 are illustrated. However, correspondingly, the horizontal field of view 10 of the second radar sensor 6 is here also divided in multiple partial ranges. Although the further description relates to the mode of operation of the first sensor 5, the mode of operation of the second sensor 6 corresponds to that of the first sensor 5.

The number of the partial ranges A to G is only exemplarily illustrated in Fig. 1 and can be different according to embodiment. In the embodiment, a total of seven partial ranges A to G is provided, which are illuminated one after the other by the radar sensor 5.

The mode of operation of the radar sensor 5 is as follows: in a single measurement cycle of the radar sensor 5, the main lobe of the transmitting antenna is once stepwise pivoted from the partial range A up to the partial range G, such that the partial ranges A to G are illuminated one after the other. Therein, for each partial range A to G, a temporal sequence of frequency-modulated chirp signals (chirps) is respectively emitted. First, such a sequence of chirp signals is emitted for the partial range A. After a preset transmission pause, then, a sequence of chirp signals is emitted to the partial range B. After a further preset transmission pause, then, the partial range C is irradiated etc. As is apparent from Fig. 1, the radar sensor 5 has a larger reach for the partial range G than for the remaining partial ranges A to F. This is achieved in that the emitted sequence has more chirp signals for the partial range G than for the remaining ranges A to F. While for example 16 chirp signals are emitted within the respective sequence for the partial ranges A to F, for example a total of 64 chirp signals within the sequence is emitted for the partial range G.

The detection of the target objects 12a, 12b is therefore individually and separately effected for each partial range A to G. Thus, it is possible to track the target objects 12a, 12b in the entire field of view 9, 10.

In a single measurement cycle of the radar sensor 5, thus, in the embodiment, a total of seven sequences of frequency-modulated chirp signals is emitted, namely a sequence of 16 chirp signals for the partial ranges A to F respectively as well as a sequence of 64 chirp signals for the partial range G. Correspondingly, the received signals also each include a plurality of chirp signals. The received signal for the partial range A includes - if reflection on a target object occurs - 16 chirp signals; the received signal for the partial range B also includes 16 chirp signals, and the respective received signals for the partial ranges C to F also each include 16 chirp signals. By contrast, the received signal from the partial range G includes 64 chirp signals.

However, the received signals of the radar sensor 5 do not only include useful signals from the target object, but are also affected by interference signals. Such interference signals superimposed on the received signal can for example originate from the other radar sensor 6 or else from extraneous sources external to vehicle, such as for example from sensors of other vehicles or the like. These interferences are now detected and suppressed or filtered out in the received signal of the radar sensor 5.

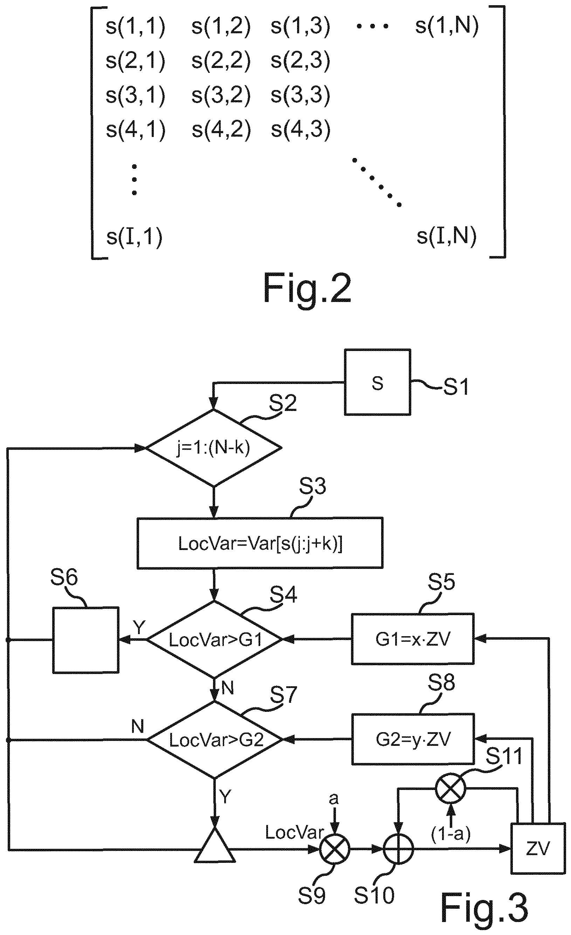

Therein, the detection and/or the suppression of the interference are effected separately and individually for each partial range A to G. This means that the respective received signals from the partial ranges A to G are processed and evaluated separately from each other. An exemplary receive matrix provided based on a received signal for one of the partial ranges A to G (e.g. for the partial range A) is illustrated in Fig. 2. For generating the receive matrix, the received signal including the plurality of chirp signals (e.g. 16 chirp signals) is mixed down to the baseband and sampled with the aid of an analog-digital converter .The samples of a single chirp signal are then combined in a common line of the receive matrix such that each line of the receive matrix includes the samples of an entire single chirp signal. In the first line, thus, the samples of the first chirp signal are indicated, in the second line, the samples of the second chirp signal etc. Therein, N denotes the number of the samples within a chirp signal, wherein for example it applies: N = 256. By contrast, I denotes the number of the chirp signals within the sequence. As already explained, depending on the partial range A to G, it can apply: I = 16 or I = 64. The samples of the received signal are denoted by s(i,n).

For each received signal - and thus for each receive matrix - the interference is individually detected and suppressed. The interference is also detected and suppressed individually for each chirp signal within the receive matrix and thus individually for each line of the receive matrix. Below, two different methods for detecting the interference are described. In the operation of the radar sensor 5 (and also of the radar sensor 6 separately) at least one of the two methods is thereby applied. Advantageously, the two methods can also be combined with each other and the results then be compared to each other and thus made plausible.

According to the first method, the interference in a certain chirp signal (a certain line of the receive matrix) is detected in the manner that the samples of this chirp signal are each individually compared to a sample of an adjacent, in particular of an immediately succeeding chirp signal. Therein, the comparison is effected between each two samples of adjacent chirp signals, which (the samples) have the same row position (index n) within the respective row of samples. For this purpose, a difference between the two samples is determined, and then it is decided whether or not these two samples are affected by interference based on the amount of the difference. This decision is made in binary manner. This means that a sample can be interpreted either as free of interference or else as affected by interference.

According to the first method, for every other chirp signal (for every other line of the receive matrix) or for each chirp signal except for the last chirp signal, the following difference is each individually calculated for each sample of this chirp signal:

$$slope\left(i_{chirp}, n_{sample}\right) = \left| s\left(i_{chirp} + 1, n_{sample}\right) - s\left(i_{chirp}, n_{sample}\right) \right|,$$

wherein $i_{chirp}$ denotes the row position of the examined chirp signal within the sequence, $n_{sample}$ denotes the row position of the examined sample within the chirp signal, slope($i_{chirp}, n_{sample}$) denotes the amount of the difference and s($i_{chirp}, n_{sample}$) denotes the samples of the received signal. The computing device of the radar sensor 5 then checks for each sample whether the amount of the difference is greater than a preset limit value.

If the amount of the difference is greater than the limit value, the two samples s($i_{chirp}+1, n_{sample}$) as well as s($i_{chirp}, n_{sample}$) are interpreted as affected by interference.

For each sample of the receive matrix, thus, it can be checked whether or not this sample is affected by interference.

The second method for detecting the interference is now explained in more detail with reference to Fig. 3:

In a first step S1, the receive matrix s with samples is provided. Each line of the receive matrix s is then separately processed one after the other. In a following second step S2, a counter value j is implemented, which is incremented, thus respectively increased by one, from 1 to N-k. Therein, N denotes the number of the samples within a line of the receive matrix and is for example equal to 256, while k is a preset constant and for example it applies: k=4.

In a further step S3, first, a subset of samples s(j:j+k) within the examined line is defined. Thus, the subset can include a total of five samples, namely five immediately consecutive samples of the same line of the receive matrix and therefore of the same chirp signal. Based on this subset of samples s(j:j+k), then, a parameter value is determined, which characterizes a deviation of these samples s(j) to s(j+k) from each other and thus a dispersion of the samples within the examined subset. In the embodiment, the local variance LocVar of these samples s(j) to s(j+k) is determined as the parameter value.

In a following step S4, the computing device checks whether the parameter value LocVar is greater than a first threshold value G1. This first threshold value G1 is calculated from an intermediate value ZV by multiplication of this intermediate value ZV by a variable x in step S5. The variable x can for example be set to 11.

If the check in step S4 reveals that the parameter value LocVar is greater than the threshold value G1, thus, the method proceeds to a step S6, in which the following is implemented: first, one of the samples, in particular the sample s(j+2), is interpreted as affected by interference and identified as such. If the preceding sample, in particular the sample s(j+1), of the same line was not identified as affected by interference and additionally the second preceding sample, in particular the sample s(j), was identified as affected by interference, the immediately preceding sample (s(j+1)) is also interpreted as affected by interference and identified as such. The method then returns to step S2, in which the counter value j is incremented.

If the check in step S4 reveals that the parameter value LocVar is smaller than the first threshold value G1, thus, the method proceeds to a further step S7, in which is it checked by the computing device whether or not the intermediate value ZV is to be adapted and thus to be set to a new value. To this, the parameter value LocVar is compared to a second threshold value G2. If the parameter value LocVar is greater than the second threshold value G2, thus, the method returns to step S2, in which the counter value j is incremented. However, if the parameter value LocVar is smaller than the second threshold value G2, thus, the intermediate value ZV is adapted.

The second threshold value G2, too, is calculated immediately from the intermediate value ZV, namely by multiplication of the intermediate value ZV by a constant y according to step S8. This constant y is smaller than the constant x and is for example 3. Both values x, y can optionally also be variably set and thus be varied in operation.

The first threshold value G1 is therefore greater than the second threshold value G2. Since the threshold values G1 and G2 are directly calculated from the intermediate value ZV, the adaptation of the two threshold values G1 and G2 is effected at the same time by variation of the intermediate value ZV. This means that the two threshold values G1, G2 are varied synchronously and proportionally to each other.

If it is determined in step S7 that the parameter value LocVar is smaller than the second threshold value G2, thus, the adaptation of the intermediate value ZV is effected on the one hand and the method also returns to step S2 on the other hand. The adaptation of the intermediate value ZV is configured as follows:

For the calculation of the new intermediate value ZV, a constant a is defined, which can for example be 0.0000075. In step S9, the parameter value LocVar is multiplied by the constant a, and the result of this multiplication is supplied to an addition in step S10. The result of a multiplication of the current intermediate value ZV by the factor (1-a) is supplied to this addition as the second addend, which is performed in step S11. The new intermediate value therefore results from the following equation:

$$ZV = a \cdot LocVar + (1-a) \cdot ZV',$$

wherein ZV denotes the new intermediate value and ZV' denotes the previous intermediate value.

The intermediate value ZV and thus the threshold values G1 and G2 are therefore dynamically adjusted in the operation of the radar sensor 5, 6. This adjustment is preferably individually effected for each partial range A to G of the field of view 9, 10 of the radar sensor 5, 6.

If the interference in the subset of samples s(j:j+k) is detected in step S4 and j=1 (beginning of the chirp signal), thus, all of the samples s(1) to s(1+k) are interpreted as affected by interference and identified as such. At the end of the examined chirp signal too, if j=N-k (e.g. 251) and the interference is detected in step S4 (LocVar > G1), all of the samples of this subset s(N-k) to s(N) are interpreted as affected by interference and identified as such.

In case between two samples s(j) and s(j+2) identified as affected by interference, there is a sample s(j+1), in which interference is not detected, it is provided that this sample s(j+1) too is (re)interpreted as affected by interference.

Optionally, the values x and/or y and/or a can be adjusted individually for each partial range A to G.

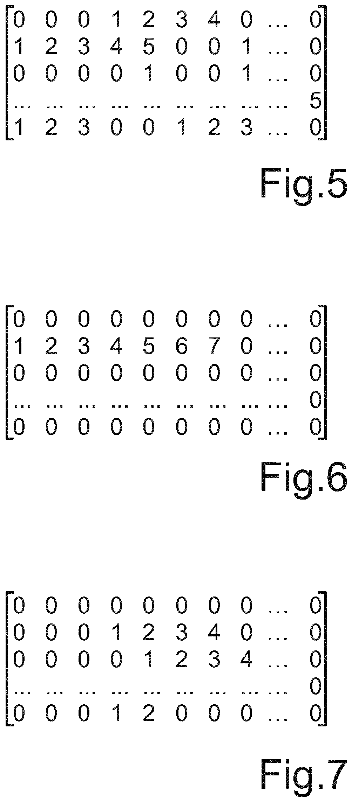

Independently of the used method for detecting the interference, an interference matrix is generated as a result, in which it is separately specified to each sample, whether or not the interference has been detected in this sample. An exemplary interference matrix is illustrated in Fig. 5. Therein, the size of the interference matrix corresponds to the size of the receive matrix, wherein the samples affected by interference are designated by integers greater than zero. The samples, in which interference was not detected, are marked with "0". The samples within a common line, in which interference was detected and which are associated with one and the same interference, are provided with serial numbers. The sample at the beginning of the interference is marked with "1", the next sample with "2", the further sample with "3" etc. up to the next sample, in which interference was not detected. The last sample of an interference is therefore marked with a number, which corresponds to the length of the interference, wherein the length of the interference is indicated by the number of the samples affected by interference. The distance between two interferences within a chirp signal tolerates at least two samples. If a distance of a single sample between two interferences is detected, thus, this sample is also marked as affected by interference and the two interferences are combined.

In the example according to Fig. 5, accordingly, interference from the fourth sample of the first chirp signal is detected, wherein the length of this interference is four samples. In two of the chirp signals, two interferences are respectively detected, wherein one of the interferences directly begins at the first sample.

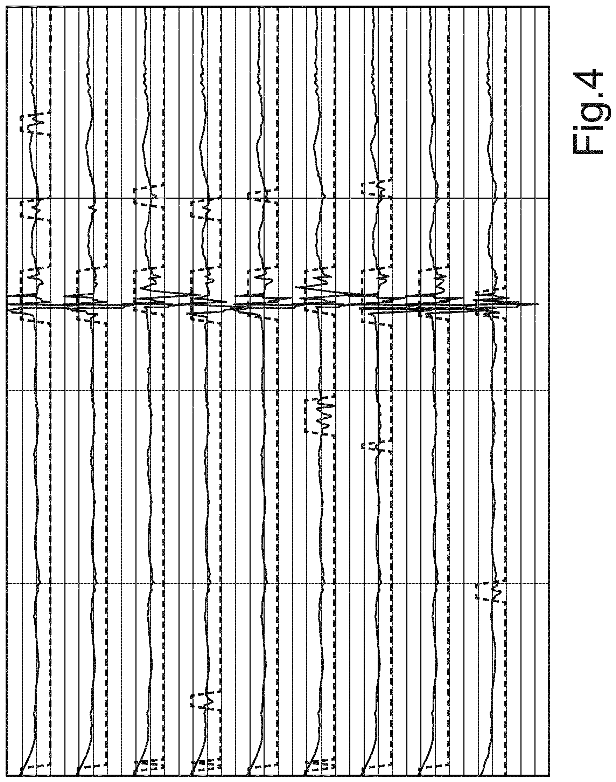

In Fig. 4, temporal progresses of chirp signals of a received signal are illustrated (solid lines). The progress of the detected interferences (dashed lines) is also presented to each chirp signal. As is apparent from Fig. 4, the decision is binary: either interference is detected in a certain sample or interference is not detected.

If the interference matrix is present, thus, the interference in the received signal (in the receive matrix) can be suppressed. Therein, in the computing device of the radar sensor 5, a total of three different signal correction algorithms is stored, which serve for removing the interference from the received signal. For each chirp signal and thus for each line of the receive matrix, therein, the optimum signal correction algorithm is respectively individually selected in order to suppress the interference within this chirp signal. Therein, the selection is effected depending on the detected interference and in particular depending on the position of the interference within the respective chirp signal, depending on the position of the chirp signal within the sequence and/or depending on the length of the detected interference. The selection can also be effected individually for each detected interference.

In the embodiment, the following three signal correction algorithms are stored in the computing device:

First algorithm: according to this first algorithm, interpolation of the samples affected by interference over the immediately adjacent chirp signals is proposed. Therein, the interpolation is effected column by column in the receive matrix. The sample of a chirp signal affected by interference is replaced with an interpolated value, which is calculated by linear interpolation of samples, which have the same row number (row position) in the respective immediately adjacent chirp signals.

Second algorithm: according to this second algorithm, interpolation within a certain chirp signal is performed, the samples of which are affected by interference. Here, the linear interpolation is effected based on basic values, which are located on the two sides of samples affected by interference. Therein, at least two basic values can be assumed respectively on the two sides, which are free of interference. However, if the interference is detected at the beginning of a chirp signal, as it is for example illustrated in Fig. 5 in the second line of samples, thus, on the left side of the interfered samples, a constant, preset value can be defined as the basic value for the interpolation.

Third algorithm: according to the third algorithm, the interfered samples are replaced with a preset, constant value.

The first algorithm is selected for the samples of a certain chirp signal whenever at least in the immediately adjacent chirp signals, at least those samples are free of interference, which have the same row position within the respective chirp signal. With respect to the receive matrix, this means that the first algorithm is selected whenever the immediately adjacent samples located in the same column are free of interference.

If the conditions for the first algorithm are not satisfied, thus, the second algorithm is selected. This second algorithm can also be selected only on condition that the length of the interference is smaller than a preset limit value, which can for example be 100 samples.

If the condition for the second algorithm either is not satisfied, thus, the third algorithm is selected.

In Fig. 6 and 7, exemplary interference matrices are illustrated. With the interference in the second line of the interference matrix according to Fig. 6, the first algorithm can be selected because the respectively (vertically) adjacent samples of the adjacent lines are free of interferences. The affected samples of the second line are therefore replaced with interpolated values, which are calculated by linear interpolation of the respective adjacent samples of the two adjacent lines.

In the interference matrix according to Fig. 7, for the interferences presented there, the second algorithm is respectively selected because the adjacent lines are also affected by interference or the interference is detected in the last line. Because the length of the interference is respectively smaller than 100, the second algorithm can be selected, in which the affected samples are replaced with interpolated values, which are calculated by linear interpolation of the adjacent samples of the same line.

By such an approach, the interference as it is exemplarily illustrated in Fig. 4 can be completely eliminated, and the chirp signals can be "smoothed". Thus, the detection of the target objects is also effected considerably more precisely and reliably.

**Claims**

1.  Method for suppressing interference in a received signal (s) received by a radar sensor (5, 6) of a motor vehicle (1), wherein for detecting a target object (12) in an environment of the motor vehicle (1) a transmit signal including a sequence of consecutive frequency-modulated chirp signals is emitted by means of the radar sensor (5, 6) and an echo signal reflected on the target object (12) is received as the received signal (s) with the superimposed interference, and wherein after receiving the received signal (s) by the radar sensor (5, 6) the interference of the received signal (s) is detected and suppressed in the received signal (s) by means of an electronic computing device, wherein at least two signal correction algorithms different from each other for suppressing the interference are stored in the computing device, wherein the control device selects at least one of the at least two signal correction algorithms depending on the detected interference in order to suppress the interference in the received signal (s), **characterized in that** the selection of a signal correction algorithm from the at least two signal correction algorithms is effected individually for each chirp signal of the received signal (s), in which the interference is detected, and that the selection of the at least one signal correction algorithm is effected depending on:

    - the position of the chirp signal affected by interference within the sequence, and
    - the number of samples of the interference to be suppressed within a chirp signal.

2.  Method according to claim 1,
    **characterized in that**

the selection of the at least one signal correction algorithm for a chirp signal is effected depending on the position of the interference within this chirp signal.

3. Method according to anyone of the preceding claims,
**characterized in that**
at least two signal correction algorithms differ in whether samples of the received signal (s), in which the interference is detected, are replaced with interpolated values or with a preset value.

4. Method according to anyone of the preceding claims,
**characterized in that**
at least two signal correction algorithms differ in whether interpolated values, with which samples of the received signal (s) within a chirp signal are replaced, are provided by interpolation of other samples within the same chirp signal or by interpolation of samples of adjacent chirp signals.

5. Method according to anyone of the preceding claims,
**characterized in that**
according to a first signal correction algorithm, samples of a chirp signal of the received signal (s) are replaced with interpolated values, which are provided by interpolation of samples of adjacent chirp signals.

6. Method according to claim 5,
**characterized in that**
the first signal correction algorithm is selected for suppressing the interference within a chirp signal if at least in the immediately adjacent chirp signals of the same sequence at least those samples are free of interference, which have the same row position within the respective chirp signal as the samples to be replaced.

7. Method according to anyone of the preceding claims,
**characterized in that**
according to a second signal correction algorithm, samples of a chirp signal of the received signal (s) are replaced with interpolated values, which are provided by interpolation of adjacent samples of the same chirp signal.

8. Method according to claim 7,
**characterized in that**
the second signal correction algorithm is selected for suppressing the interference within a chirp signal only on condition that the number of the samples to be replaced within this chirp signal is smaller than a preset limit value.

9. Method according to claim 7 or 8,
**characterized in that**
the second signal correction algorithm is selected for suppressing the interference within a chirp signal if this chirp signal is a first or a last chirp signal of the sequence or interference is detected in immediately adjacent chirp signals of the same sequence.

10. Method according to anyone of the preceding claims,
**characterized in that**
according to a third signal correction algorithm, samples of a chirp signal of the received signal (s) are replaced with a preset value.

11. Method according to claim 10,
**characterized in that**
the third signal correction algorithm is selected for suppressing the interference within a chirp signal if the following two conditions are satisfied at the same time:

- the number of the samples to be replaced within this chirp signal is larger than a preset limit value, and
- this chirp signal is a first or a last chirp signal of the sequence or interference is detected in immediately adjacent chirp signals of the same sequence.

12. Driver assistance device (2) for a motor vehicle (1), including a radar sensor (5, 6), which is formed for emitting a transmit signal including a sequence of consecutive frequency-modulated chirp signals and for receiving an echo signal reflected on a target object (12) as the received signal (s) with superimposed interference for detecting the target object (12) in an environment of the motor vehicle (1), and including an electronic computing device adapted to detect and to suppress the interference of the received signal (s) after receiving the received signal (s) by the radar sensor (5, 6), wherein at least two signal correction algorithms different from each other for suppressing the interference in the received signal (s) are stored in the computing device, wherein the computing device is adapted to select at least one of the at least two signal correction algorithms depending on the detected interference and to suppress the interference in the received signal (s) according to the selected signal correction algorithm **characterized in that** the selection of a signal correction algorithm from the at least two signal correction algorithms is effected individually for each chirp signal of the received signal (s), in which the interference is detected, and that the selection of the at least one signal correction algorithm is effected depending on:

- the position of the chirp signal affected by interference within the sequence, and
- the number of samples of the interference to be suppressed within a chirp signal.

**Patentansprüche**

1. Verfahren zum Unterdrücken einer Störung in einem Empfangssignal (s), das durch einen Radarsensor (5, 6) eines Kraftfahrzeugs (1) empfangen wird, wobei zum Detektieren eines Zielobjekts (12) in einer Umgebung des Kraftfahrzeugs (1) ein Sendesignal, das eine Folge aufeinanderfolgender frequenzmodulierter Chirp-Signale enthält, mittels des Radarsensors (5, 6) abgestrahlt wird und ein Echosignal, das am Zielobjekt (12) reflektiert wurde, als das Empfangssignal (s) mit der überlagerten Störung empfangen wird, und wobei nach dem Empfangen des Empfangssignals (s) durch den Radarsensor (5, 6) die Störung des Empfangssignals (s) detektiert und im Empfangssignal (s) mittels einer elektronischen Recheneinrichtung unterdrückt wird, wobei mindestens zwei Signalkorrekturalgorithmen, die voneinander verschieden sind, zum Unterdrücken der Störung in der Recheneinrichtung gespeichert sind, wobei die Steuereinrichtung mindestens einen der mindestens zwei Signalkorrekturalgorithmen abhängig von der detektierten Störung wählt, um die Störung im Empfangssignal (s) zu unterdrücken, **dadurch gekennzeichnet, dass**
die Auswahl eines Signalkorrekturalgorithmus aus den mindestens zwei Signalkorrekturalgorithmen einzeln für jedes Chirp-Signal des Empfangssignals (s), in dem die Störung detektiert wird, bewirkt wird und dass die Auswahl des mindestens einen Signalkorrekturalgorithmus abhängig von Folgendem bewirkt wird:

- der Position des Chirp-Signals, das durch eine Störung beeinträchtigt wird, in der Folge und
- der Anzahl von Abtastwerten der Störung, die in einem Chirp-Signal unterdrückt werden soll.

2. Verfahren nach Anspruch 1, **dadurch gekennzeichnet, dass**
die Auswahl des mindestens einen Signalkorrekturalgorithmus für ein Chirp-Signal abhängig von der Position der Störung in diesem Chirp-Signal bewirkt wird.

3. Verfahren nach einem der vorhergehenden Ansprüche, **dadurch gekennzeichnet, dass**
sich mindestens zwei Signalkorrekturalgorithmen darin unterscheiden, ob die Abtastwerte des Empfangssignals (s), in dem die Störung detektiert wird, durch interpolierte Werte oder durch einen voreingestellten Wert ersetzt werden.

4. Verfahren nach einem der vorhergehenden Ansprüche, **dadurch gekennzeichnet, dass**
sich mindestens zwei Signalkorrekturalgorithmen darin unterscheiden, ob interpolierte Werte, mit denen Abtastwerte des Empfangssignals (s) in einem Chirp-Signal ersetzt werden, durch Interpolation weiterer Abtastwerte im selben Chirp-Signal oder durch Interpolation von Abtastwerten benachbarter Chirp-Signale bereitgestellt werden.

5. Verfahren nach einem der vorhergehenden Ansprüche, **dadurch gekennzeichnet, dass**
gemäß einem ersten Signalkorrekturalgorithmus Abtastwerte eines Chirp-Signals des Empfangssignals (s) durch interpolierte Werte ersetzt werden, die durch Interpolation von Abtastwerten benachbarter Chirp-Signale bereitgestellt werden.

6. Verfahren nach Anspruch 5, **dadurch gekennzeichnet, dass**
der erste Signalkorrekturalgorithmus zum Unterdrücken der Störung in einem Chirp-Signal gewählt wird, wenn mindestens in den unmittelbar benachbarten Chirp-Signalen derselben Folge mindestens die Abtastwerte frei von Störungen sind, die dieselbe Zeilenposition im entsprechenden Chirp-Signal besitzen wie die zu ersetzenden Abtastwerte.

**7.** Verfahren nach einem der vorhergehenden Ansprüche, **dadurch gekennzeichnet, dass** gemäß einem zweiten Signalkorrekturalgorithmus Abtastwerte eines Chirp-Signals des Empfangssignals (s) durch interpolierte Werte ersetzt werden, die durch Interpolation benachbarter Abtastwerte desselben Chirp-Signals bereitgestellt werden.

**8.** Verfahren nach Anspruch 7, **dadurch gekennzeichnet, dass** der zweite Signalkorrekturalgorithmus zum Unterdrücken der Störung in einem Chirp-Signal nur unter der Bedingung gewählt wird, dass die Anzahl der zu ersetzenden Abtastwerte in diesem Chirp-Signal kleiner als ein voreingestellter Grenzwert ist.

**9.** Verfahren nach Anspruch 7 oder 8, **dadurch gekennzeichnet, dass** der zweite Signalkorrekturalgorithmus zum Unterdrücken der Störung in einem Chirp-Signal gewählt wird, wenn das Chirp-Signal ein erstes oder ein letztes Chirp-Signal der Folge ist oder eine Störung in unmittelbar benachbarten Chirp-Signalen derselben Folge detektiert wird.

**10.** Verfahren nach einem der vorhergehenden Ansprüche, **dadurch gekennzeichnet, dass** gemäß einem dritten Signalkorrekturalgorithmus Abtastwerte eines Chirp-Signals des Empfangssignals (s) durch einen voreingestellten Wert ersetzt werden.

**11.** Verfahren nach Anspruch 10, **dadurch gekennzeichnet, dass** der dritte Signalkorrekturalgorithmus zum Unterdrücken der Störung in einem Chirp-Signal gewählt wird, wenn die folgenden zwei Bedingungen gleichzeitig erfüllt sind:

- die Anzahl der zu ersetzenden Abtastwerte in diesem Chirp-Signal ist größer als ein voreingestellter Grenzwert und
- dieses Chirp-Signal ist ein erstes oder ein letztes Chirp-Signal der Folge oder eine Störung wird in unmittelbar benachbarten Chirp-Signalen derselben Folge detektiert.

**12.** Fahrerunterstützungsvorrichtung (2) für ein Kraftfahrzeug (1), die einen Radarsensor (5, 6) enthält, der zum Abstrahlen eines Sendesignals, das eine Folge aufeinanderfolgender frequenzmodulierter Chirp-Signale enthält, und zum Empfangen eines Echosignals, das an einem Zielobjekt (12) reflektiert wurde, als das Empfangssignal (s) mit überlagerter Störung zum Detektieren des Zielobjekts (12) in einer Umgebung des Kraftfahrzeugs (1) gebildet ist, und eine elektronische Rechenvorrichtung enthält, die ausgelegt ist, die Störung des Empfangssignals (s) nach dem Empfangen des Empfangssignals (s) durch den Radarsensor (5, 6) zu detektieren und zu unterdrücken, wobei mindestens zwei Signalkorrekturalgorithmen, die voneinander verschieden sind, zum Unterdrücken der Störung im Empfangssignal (s) in der Recheneinrichtung gespeichert sind, wobei die Recheneinrichtung ausgelegt ist, mindestens einen der mindestens zwei Signalkorrekturalgorithmen abhängig von der detektierten Störung zu wählen und die Störung im Empfangssignal (s) gemäß dem gewählten Signalkorrekturalgorithmus zu unterdrücken, **dadurch gekennzeichnet, dass** die Auswahl eines Signalkorrekturalgorithmus aus den mindestens zwei Signalkorrekturalgorithmen einzeln für jedes Chirp-Signal des Empfangssignals (s), in dem die Störung detektiert wird, bewirkt wird und dass die Auswahl des mindestens einen Signalkorrekturalgorithmus abhängig von Folgendem bewirkt wird:

- der Position des Chirp-Signals, das durch eine Störung beeinträchtigt wird, in der Folge und
- der Anzahl von Abtastwerten der Störung, die unterdrückt werden soll, in einem Chirp-Signal.

**Revendications**

**1.** Procédé de suppression d'une interférence dans un signal (s) reçu par un capteur radar (5, 6) d'un véhicule motorisé (1) ; pour la détection d'un objet cible (12) dans un environnement du véhicule motorisé (1), un signal d'émission comportant une séquence de signaux chirps à modulation de fréquence consécutifs étant émis au moyen du capteur radar (5, 6) et un signal d'écho réfléchi sur l'objet cible (12) étant reçu sous forme du signal (s) reçu avec superposition de l'interférence et, suite à la réception du signal (s) reçu par le capteur radar (5, 6), l'interférence du signal (s) reçu étant détectée et supprimée dans le signal (s) reçu au moyen d'un dispositif informatique électronique, au moins deux algorithmes de correction de signal différents entre eux permettant la suppression de l'interférence étant enregistrés dans le dispositif informatique, le dispositif de commande sélectionnant au moins un des au moins deux algorithmes de correction de signal en fonction de l'interférence détectée dans le but de supprimer l'interférence dans le signal (s) reçu, **caractérisé en ce que** la sélection d'un algorithme de correction de signal parmi les au moins deux algorithmes de correction de signal s'effectue individuellement pour chaque signal chirp du signal (s) reçu où l'interférence est détectée, et **en ce que** la sélection de l'au moins un algorithme de correction de signal s'effectue en fonction :

- de la position du signal chirp affecté par une interférence au sein de la séquence, et
- du nombre d'échantillons de l'interférence à supprimer au sein d'un signal chirp.

2. Procédé selon la revendication 1,
   **caractérisé en ce que**
   la sélection de l'au moins un algorithme de correction de signal pour un signal chirp s'effectue en fonction de la position de l'interférence au sein de ce signal chirp.

3. Procédé selon l'une quelconque des revendications précédentes,
   **caractérisé en ce que**
   au moins deux algorithmes de correction de signal diffèrent selon que des échantillons du signal (s) reçu où l'interférence est détectée sont remplacés par des valeurs interpolées ou par une valeur prédéfinie.

4. Procédé selon l'une quelconque des revendications précédentes,
   **caractérisé en ce que**
   au moins deux algorithmes de correction de signal diffèrent selon que des valeurs interpolées, par lesquelles des échantillons du signal (s) reçu au sein d'un signal chirp sont remplacés, sont fournies par interpolation d'autres échantillons au sein du même signal chirp ou par interpolation d'échantillons de signaux chirps adjacents.

5. Procédé selon l'une quelconque des revendications précédentes,
   **caractérisé en ce que**
   selon un premier algorithme de correction de signal, des échantillons d'un signal chirp du signal (s) reçu sont remplacés par des valeurs interpolées, lesquelles sont fournies par interpolation d'échantillons de signaux chirps adjacents.

6. Procédé selon la revendication 5,
   **caractérisé en ce que**
   le premier algorithme de correction de signal est sélectionné pour la suppression de l'interférence au sein d'un signal chirp si, au moins dans les signaux chirps immédiatement adjacents de la même séquence, au moins les échantillons qui occupent la même position de ligne au sein du signal chirp respectif que les échantillons à remplacer sont exempts d'interférence.

7. Procédé selon l'une quelconque des revendications précédentes,
   **caractérisé en ce que**
   selon un deuxième algorithme de correction de signal, des échantillons d'un signal chirp du signal (s) reçu sont remplacés par des valeurs interpolées, lesquelles sont fournies par interpolation d'échantillons adjacents du même signal chirp.

8. Procédé selon la revendication 7,
   **caractérisé en ce que**
   le deuxième algorithme de correction de signal est sélectionné pour la suppression de l'interférence au sein d'un signal chirp uniquement à la condition que le nombre des échantillons à remplacer au sein de ce signal chirp est inférieur à une valeur limite prédéfinie.

9. Procédé selon la revendication 7 ou 8,
   **caractérisé en ce que**
   le deuxième algorithme de correction de signal est sélectionné pour la suppression de l'interférence au sein d'un signal chirp si ce signal chirp est un premier ou un dernier signal chirp de la séquence ou une interférence est détectée dans des signaux chirps immédiatement adjacents de la même séquence.

10. Procédé selon l'une quelconque des revendications précédentes,
    **caractérisé en ce que**
    selon un troisième algorithme de correction de signal, des échantillons d'un signal chirp du signal (s) reçu sont remplacés par une valeur prédéfinie.

**11.** Procédé selon la revendication 10,
**caractérisé en ce que**
le troisième algorithme de correction de signal est sélectionné pour la suppression de l'interférence au sein d'un signal chirp si les deux conditions suivantes sont satisfaites en même temps :

- le nombre des échantillons à remplacer au sein de ce signal chirp est supérieur à une valeur limite prédéfinie, et
- ce signal chirp est un premier ou un dernier signal chirp de la séquence ou une interférence est détectée dans des signaux chirps immédiatement adjacents de la même séquence.

**12.** Dispositif (2) d'aide à la conduite pour un véhicule motorisé (1), comportant un capteur radar (5, 6) qui est conçu pour émettre un signal d'émission comportant une séquence de signaux chirps à modulation de fréquence consécutifs et pour recevoir un signal d'écho réfléchi sur un objet cible (12) sous forme du signal (s) reçu avec superposition d'une interférence pour la détection de l'objet cible (12) dans un environnement du véhicule motorisé (1), et comportant un dispositif informatique électronique adapté à détecter et à supprimer l'interférence du signal (s) reçu suite à la réception du signal (s) reçu par le capteur radar (5, 6), au moins deux algorithmes de correction de signal différents entre eux permettant la suppression de l'interférence dans le signal (s) reçu étant enregistrés dans le dispositif informatique, le dispositif informatique étant adapté à sélectionner au moins un des au moins deux algorithmes de correction de signal en fonction de l'interférence détectée et pour supprimer l'interférence dans le signal (s) reçu selon l'algorithme de correction de signal sélectionné, **caractérisé en ce que** la sélection d'un algorithme de correction de signal parmi les au moins deux algorithmes de correction de signal s'effectue individuellement pour chaque signal chirp du signal (s) reçu où l'interférence est détectée, et **en ce que** la sélection de l'au moins un algorithme de correction de signal s'effectue en fonction :

- de la position du signal chirp affecté par une interférence au sein de la séquence, et
- du nombre d'échantillons de l'interférence à supprimer au sein d'un signal chirp.

EP 2 912 486 B1

Fig.1

15

$$\begin{bmatrix} s(1,1) & s(1,2) & s(1,3) & \cdots & s(1,N) \\ s(2,1) & s(2,2) & s(2,3) & & \\ s(3,1) & s(3,2) & s(3,3) & & \\ s(4,1) & s(4,2) & s(4,3) & & \\ \vdots & & & \ddots & \\ s(I,1) & & & & s(I,N) \end{bmatrix}$$

## Fig.2

Fig.3

Fig.4

$$\begin{bmatrix} 0 & 0 & 0 & 1 & 2 & 3 & 4 & 0 & \ldots & 0 \\ 1 & 2 & 3 & 4 & 5 & 0 & 0 & 1 & \ldots & 0 \\ 0 & 0 & 0 & 0 & 1 & 0 & 0 & 1 & \ldots & 0 \\ \ldots & \ldots & \ldots & \ldots & \ldots & \ldots & \ldots & \ldots & \ldots & 5 \\ 1 & 2 & 3 & 0 & 0 & 1 & 2 & 3 & \ldots & 0 \end{bmatrix}$$

Fig.5

$$\begin{bmatrix} 0 & 0 & 0 & 0 & 0 & 0 & 0 & 0 & \ldots & 0 \\ 1 & 2 & 3 & 4 & 5 & 6 & 7 & 0 & \ldots & 0 \\ 0 & 0 & 0 & 0 & 0 & 0 & 0 & 0 & \ldots & 0 \\ \ldots & \ldots & \ldots & \ldots & \ldots & \ldots & \ldots & \ldots & \ldots & 0 \\ 0 & 0 & 0 & 0 & 0 & 0 & 0 & 0 & \ldots & 0 \end{bmatrix}$$

Fig.6

$$\begin{bmatrix} 0 & 0 & 0 & 0 & 0 & 0 & 0 & 0 & \ldots & 0 \\ 0 & 0 & 0 & 1 & 2 & 3 & 4 & 0 & \ldots & 0 \\ 0 & 0 & 0 & 0 & 1 & 2 & 3 & 4 & \ldots & 0 \\ \ldots & \ldots & \ldots & \ldots & \ldots & \ldots & \ldots & \ldots & \ldots & 0 \\ 0 & 0 & 0 & 1 & 2 & 0 & 0 & 0 & \ldots & 0 \end{bmatrix}$$

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102009057191 A1
- US 20060125682 A1
- US 6094160 A
- US 6121918 A
- US 20110291875 A1
- WO 2011002316 A1
- EP 1840595 A2